# EUROPÄISCHE PATENTANMELDUNG

(11) **EP 2 441 944 A2**
(43) Veröffentlichungstag der Anmeldung: **18.04.2012**
(21) Anmeldenummer: 11008100.7
(22) Anmeldetag: 06.10.2011
(51) Int. Cl.: F02G 5/04, F01N 5/02, B60H 1/02

(54) **Mobile Arbeitsmaschine**

(30) Priorität: 13.10.2010 CH 16752010
(71) Anmelder: Liebherr-Machines Bulle SA, 1630 Bulle (CH)
(72) Erfinder: Quasthoff, Marcus, Dr., 1663 Epagny (CH); Schlager, Gerd, Dr., 1630 Bulle (CH)
(74) Vertreter: Laufhütte, Dieter

(57) **Zusammenfassung**

Die vorliegende Erfindung betrifft eine mobile Arbeitsmaschine mit wenigstens einem Abwärme produzierenden Antrieb, insbesondere einer Verbrennungskraftmaschine, wobei die mobile Arbeitsmaschine wenigstens einen Wärmespeicher zur Speicherung der Abwärme aufweist.

## Beschreibung

Die Erfindung betrifft eine mobile Arbeitsmaschine mit wenigstens einem Abwärme produzierenden Antrieb, insbesondere einer Verbrennungskraftmaschine.

Während des Betriebs einer Verbrennungskraftmaschine wird der Hauptanteil aus dem chemischen Energieinhalt des zugeführten Kraftstoffs in Form von Wärme freigesetzt und muss abgeführt werden. Hohe Anteile dieser entstehenden Wärmeenergie werden über den Kühlwasserkreislauf und über das Abgassystem der Verbrennungskraftmaschine als gebündelte Leistungsflüsse abgeführt.

Bei bekannten Kraftfahrzeugen wird ein Teil der abgeführten Abwärme des Verbrennungsmotors für die Abgasnachbehandlung benötigt. Ferner lässt sich die abgeführte Abwärme bei niedrigen Umgebungstemperaturen direkt zum Beheizen der Fahrzeugkabine verwenden. Zwar hat nach dem Abschalten der Verbrennungskraftmaschine die Restwärme in dem bestehenden System einen gewissen Mehrwert, allerdings steht diese Restwärme nur kurzzeitig für einen Warmstart des Verbrennungsmotors oder den Betrieb einer Standheizung zur Verfügung. Bei längerer Stillstandzeit kühlt die Verbrennungskraftmaschine vollständig aus. Es steht folglich keine Abwärme ohne vorangehenden Neustart zur Verfügung. Darüber hinaus wird auch während des Betriebs der Verbrennungskraftmaschine der Hauptanteil der Abwärme bisher ungenutzt an die Umgebung abgeführt.

Aufgabe der vorliegenden Erfindung ist es daher, die Verwendung der erzeugten Abwärme eines Antriebs für eine mobile Arbeitsmaschine effizienter zu gestalten.

Diese Aufgabe wird durch eine mobile Arbeitsmaschine gemäß den Merkmalen des Anspruchs 1 gelöst. Weitere vorteilhafte Ausführungen sind Gegenstand der abhängigen Unteransprüche 2 bis 13.

Demnach weist die mobile Arbeitsmaschine wenigstens einen Abwärme produzierenden Antrieb auf. Beispielsweise umfasst der Antrieb eine an sich bekannte Verbrennungskraftmaschine, die in üblicher Weise Abwärme produziert und in bekannter Art und Weise abführt.

Die mobile Arbeitsmaschine kann bevorzugt einen Fahrantrieb und einen separaten Antrieb für den Einsatz eines Arbeitsgerätes aufweisen. Eine Wärmeentnahme ist zumindest aus einem Antrieb möglich. Ebenso sind hydraulische und/oder elektrische Antriebe denkbar.

Erfindungsgemäß wird nunmehr vorgeschlagen, dass die mobile Arbeitsmaschine wenigstens einen Wärmespeicher zur Speicherung der abgeführten Abwärme aufweist. Hierdurch kann ein erheblicher Anteil der Wärmeenergie, die beim Betrieb einer Verbrennungskraftmaschine anfällt und nicht unmittelbar benötigt wird, in wenigstens einem Wärmespeicher gespeichert werden. Insbesondere bietet es sich an, die abgeführte Wärmeenergie während des Betriebs in dem oder den Wärmespeichern zu kumulieren. Die gespeicherte Abwärme steht der mobilen Arbeitsmaschine auch zu Stillstandzeiten der Verbrennungskraftmaschine als Wärmequelle zur Verfügung.

Die Wärmeentnahme am Antrieb erfolgt durch wenigstens ein Entnahmemittel, das in geeigneter Position am Antrieb angeordnet ist. Eine Wärmeableitung erscheint insbesondere an gebündelten Leistungsflüssen der Abwärme des Antriebs sinnvoll.

Wenigstens ein Entnahmestelle ist vorteilhafterweise mit einem Wärmetauscher ausgestattet.

Hierbei besteht die Möglichkeit, dass wenigstens ein Wärmespeicher unmittelbar mit wenigstens einer Entnahmestelle, insbesondere über einenWärmetauscher, in Verbindung steht oder verbindbar ist. Beispielsweise kann die Sekundärseite eines oder mehrerer Wärmetauscher innerhalb eines Wärmespeichers angeordnet sein. In diesem Fall besteht eine direkte thermische Kopplung zwischen Wärmespeichermedium des Speichers und Sekundärseite des Wärmetauschers.

Alternativ kann wenigstens eine Entnahmestelle, insbesondere über einen Wärmetauscher, mittelbar über wenigstens einen Wärmekreislauf mit wenigstens einem Wärmespeicher in Verbindung stehen bzw. verbindbar sein. Dies ist insbesondere dann sinnvoll, wenn die von einer Entnahmestelle abgeführte Wärmeenergie auf mehrere Wärmespeicher verteilt werden soll. Gleiches gilt für den Fall, dass die Abwärme mehrerer Entnahmestellen genau einem Wärmespeicher zugeführt werden soll. Es lässt sich folglich ein komplexes Wärmenetzwerk aus Wärmekreisenläufen realisieren. Auch eine thermische Kopplung zwischen mindestens zwei Wärmespeichern ist möglich. Hier erweist sich eine Kaskadierung einer unbestimmten Anzahl an Wärmespeichern als besonders vorteilhaft. Demnach kann ein Wärmespeicher bis zu dem Energieinhalt, bei dem das thermische Gleichgewicht zwischen Wärmezulauf und dem Speichermedium besteht, geladen werden. Die darüber hinaus anfallende Abwärme kann an weitere nachgeschaltete Wärmespeicher weitergereicht werden.

Als effiziente Entnahmestellen der Wärmeenergie am Antrieb einer mobilen Arbeitsmaschine, insbesondere einer Verbrennungskraftmaschine, stellen sich insbesondere ein Wasserkühlkreislauf und/oder ein Ölkreislauf und/oder eine geeignete

Stelle am Abgaspfad des Antriebs dar. Pro Entnahmestelle können ein oder mehrere Entnahmemittel insbesonderewärmetauscher installiert sein. Hierdurch lässt sich aus jedem Wärmekreislauf über Wärmetauscher Abwärme in wenigstens einen Wärmespeicher abführen. Dies gilt im gleichen Maße für bestehende Ölkreisläufe einer Verbrennungskraftmaschine oder beliebige hydraulische Systeme der Arbeitsmaschine.

Durch die Wärmeentnahme mit Hilfe von Entnahmemitteln insbesondere Wärmetauschern, die unter Umständen als Zwischenwärmetauscher ausgeführt sind, können zwei oder mehrere Kühlwasser- oder Ölkreisläufe über mehrere Wärmespeicher thermisch miteinander gekoppelt sein. Die Kreisläufe erschließen sich zu einem komplexen Wärmenetzwerk.

Gleichfalls können ein oder mehrere Entnahmemittel, insbesondere Wärmetauscher, an verschiedenen geeigneten Stellen entlang des Abgaspfades installiert sein. Als geeignete Stellen treten ein beliebiger Punkt entlang des Pfades der Abgasrückführung, insbesondere ein Punkt unmittelbar nach der Trennstelle zur Abgasnachbehandlung, , sowie ein Punkt hinter einem System zur Abgasnachbehandlung hervor.

Bevorzugt ist wenigstens ein Entnahmemittel manuell bzw. automatisiert ansteuerbar oder unter Umständen auch regelbar ausgeführt. Hierdurch lassen sich einzelne Entnahmemittel optional aktivieren bzw. deaktivieren, um die Zuführung von Wärmeenergie zu wenigstens einem Wärmespeicher zu steuern. Durch Integration einer optionalen Regellogik kann die Wärmeabführung in Abhängigkeit bestimmter Betriebsparameter ausgeregelt sein. Möglich ist die Regelung auf Grundlage einer passiven Hysterese bis hin zu einer aktiven und prädiktiven Regelung. Hierdurch wird es verhindert, dass an einer Position bereits Wärmeenergie abgeführt wird, obwohl das dort für den Betrieb optimale Temperaturniveau der Komponente noch unterschritten wird. Als Beispiel sei die Abzweigung von Wärmeenergie im Abgaspfad genannt.

Um die gespeicherte Wärmeenergie effizient zum Betrieb der mobilen Arbeitsmaschine einzusetzen, ist wenigstens ein Wärmespeicher mit wenigstens einem Abgabemittel verbunden bzw. verbindbar. Damit lässt sich die gespeicherte Wärmeenergie eines Wärmespeichers oder die in den verschiedenen Wärmespeichern verfügbare Gesamtenergiemenge bei Bedarf vorwiegend während des abgeschalteten Antriebs, insbesondere der abgeschalteten Verbrennungskraftmaschine, oder auch während der Warmlaufphase des Antriebs als Quelle für einen Wärmeeintrag in verschiedene Anwendungen bzw. Funktionen der mobilen Arbeitsmaschine verwenden. Die gespeicherte Wärmeenergie dient zur Standbeheizung oder Vorheizung beliebiger Systemkomponenten der mobilen Arbeitsmaschine. Hierunter fallen z. B. die Fahrerkabine, elektrische Energiespeicher für den Betrieb der Arbeitsmaschine, Ölkreisläufe, Kraftstofftanks oder Kraftstoffzufuhrkomponenten, Einrichtungen zur Abgasnachbehandlung oder weitere beliebige Komponenten, die auf eine entsprechende Betriebstemperatur und damit auf eine Wärmequelle angewiesen sind bzw. erst ab einer gewissen Betriebstemperatur mit voller Wirksamkeit arbeiten.

Gleichfalls kann der durch ein Entnahmemittel gebildete Wärmekreislauf vorteilhafterweise bidirektional ausgeführt sein. In diesem Fall fungiert das Entnahmemittel gleichzeitig als Abgabemittel. Beispielsweise kann bei einer Vorrichtung zur Abgasnachbehandlung die überschüssige Abwärme durch das Entnahmemittel einem Wärmespeicher zugeführt werden. Während der Warmlaufphase einer Verbrennungskraftmaschine fungiert das Entnahmemittel als Abgabemittel und die gespeicherte Wärmeenergie im Wärmespeicher wird zur Unterstützung der Abgasnachbehandlung zugeführt. Gleiches Prinzip kann bei einem elektrischen Energiespeicher angewandt werden. Während des Betriebs ist der elektrische Energiespeicher zu kühlen, weshalb über das Entnahmemittel Abwärme abgeführt und an einen Wärmespeicher weitergereicht wird. Während der Betriebspausen kann eine Erwärmung des elektrischen Energiespeichers die Verfügbarkeit an elektrischer Leistung und die Haltbarkeit insbesondere bei kalten Umgebungstemperaturen maßgeblich steigern. Auch dieses Entnahmemittel ist daher bevorzugt bidirektional ausgeführt, um im Bedarfsfall als Abgabemittel die im Wärmespeicher gespeicherte Wärmeenergie an den elektrischen Energiespeicher zur Aufwärmung abzugeben.

Unter Umständen erweist es sich als vorteilhaft, wenn mehrere Wärmespeicher vorgesehen sind, die zumindest teilweise unabhängige Wärmekreisläufe bilden. Dies erlaubt die Speicherung von Wärmeenergie auf unterschiedlichen Temperaturniveaus. Dabei arbeitet zumindest ein Teil der Wärmespeicher jeweils als unabhängige Wärmequelle, wodurch eine Versorgung mit Wärmeenergie auf unterschiedlichen Temperaturniveaus gewährleistet ist. Die Ausbildung unabhängiger Wärmekreisläufe erlaubt demnach eine temperaturspezifische Versorgung der einzelnen Abgabemittel. Bespielsweise erfordern eine wirksame Vorheizung einer Einrichtung zur Abgasnachbehandlung oder eines elektrischen Energiespeichers im Allgemeinen zwei deutlich unterschiedliche Temperaturen.

Wenigstens ein Wärmespeicher kann vorteilhafterweise als Latentwärmespeicher ausgeführt sein. Ebenso ist die Ausführung wenigstens eines Wärmespeichers mit einem Wärmeträgermedium denkbar. Unter einem Wärmeträgermedium wird ein Medium mit einer vergleichweise hohen Wärmekapazität bezeichnet. Ebenfalls sind Wärmespeicher vorstellbar, die auf dem Prinzip des Druckaufbaus durch Wärmeausdehnung eines beliebigen Gases basieren.

Mehrere Wärmespeicher können in beliebiger Kombination der voranstehenden Ausführungsformen kombiniert sein.

Wenigstens ein Wärmespeicher weist zumindest ein Mess- und/oder Anzeigemittel zur Messung und Anzeige betriebsbedingter Parameter des Wärmespeichers auf. Wenigstens ein betriebsbedingter Parameter umfasst vorteilhafterweise die gespeicherte Energiemenge oder den Betriebszustand des Wärmespeichers.

In einer besonders vorteilhaften Ausführung der Erfindung weist die mobile Arbeitsmaschine wenigstens eine Steuereinheit auf, die eine geeignete Wärmemanagement-Software zur Ansteuerung einer oder mehrerer Komponenten des Wärmenetzwerkes umfasst. Die Steuereinheit übernimmt insbesondere die Ansteuerung bzw. Regelung ein oder mehrerer Ab- bzw. Entnahmemittel der mobilen Arbeitsmaschine bzw. die Überwachung der eingesetzten Wärmespeicher.

Weiterhin sind ein oder mehrere Sensorsignale an die Steuereinheit zuführbar, auf deren Grundlage eine entsprechende Steuerroutine abläuft. Zu den Sensorsignalen gehören beispielsweise die Mess- bzw. Anzeigesignale wenigstens eines Wärmespeichers. Gleichfalls können beliebige Sensorsignale ein oder mehrerer Komponenten der mobilen Arbeitsmaschine zuführbar sein. Hierzu gehören Temperatursensoren innerhalb der Kabine, Sitzsensoren im Fahrersitz oder Sensoren der Abgasnachbehandlung, etc..

Die mobile Arbeitsmaschine besitzt ferner ein Bedienpult zur manuellen Befehlseingabe für die Konfiguration und Bedienung der Steuereinheit. Dies ermöglicht z. B. die manuelle Priorisierung für die chronologische automatische Ansteuerung ein oder mehrerer Ent- bzw. Abgabemittel. Auch die Möglichkeit zur Erstellung ein oder mehrere individueller Nutzerprofile, die bei der Ansteuerung Berücksichtigung finden, ist hierdurch geboten. Eine vollständig automatisierte Ansteuerung des Wärmenetzwerkes durch die Wärmemanagement-Software, die in Abhängigkeit bestimmter Situationen und Zustände der Umwelt oder des Systems dynamisch vorgenommen wird, ist ebenso denkbar.

Die vorliegende Erfindung betrifft des Weiteren eine Vorrichtung zur Wärmerückgewinnung für eine mobile Arbeitsmaschine nach einem der vorangegangenen Ansprüche. Die Vorrichtung umfasst dabei offensichtlich wenigstens einen Wärmespeicher zur Speicherung der Abwärme eines Antriebs einer mobilen Arbeitsmaschine. Die vorteilhaften Ausführungen der Vorrichtung entsprechen im Wesentlichen den Ausführungen der erfindungsgemäßen Arbeitsmaschine, weshalb an dieser Stelle auf eine wiederholte Erläuterung verzichtet wird. Es ergeben sich aber offensichtlich dieselben Vorteile und Eigenschaften.

Die erfindungsgemäße Vorrichtung ermöglicht insbesondere die Nachrüstung bestehender mobiler Arbeitsmaschinen mit einem System zur Wärmerückgewinnung.

Ferner betrifft die Erfindung eine Steuereinheit für eine mobile Arbeitsmaschine nach einem der voranstehenden Merkmalen, auf der eine Wärmemanagement-Software ausführbar ist.

Weitere Einzelheiten und Vorteile werden im Folgenden anhand eines Ausführungsbeispiels näher erläutert.

Die im Folgenden vorgestellte mobile Arbeitsmaschine offenbart ein System, das eine Energierückgewinnung aus der durch eine Verbrennungskraftmaschine erzeugten Abwärme erlaubt. Die konkrete Ausführung der mobilen Arbeitsmaschine ist dabei irrelevant. Diese kann beispielsweise als Baumaschine, Erdbewegungsmaschine oder auch Hubgerät ausgeführt sein. Grundlage der Erfindung ist einzig das Vorhandensein eines Abwärme produzierenden Antriebs, insbesondere einer Verbrennungskraftmaschine.

Zur Speicherung der Abwärme weist die mobile Arbeitsmaschine eine Vielzahl von Wärmespeichern auf, die sich in ihrer Ausführung untereinander unterscheiden. Das Speicherprinzip eines Teils der Wärmespeicher basiert auf einem Wärmeträgermedium, dass sich durch eine hohe Wärmekapazität auszeichnet. Zumindest ein Wärmespeicher umfasst ein Phasenwechselmaterial und die Speicherung der Wärmeenergie erfolgt nach dem Prinzip eines Latentwärmespeichers.

Die Verbrennungskraftmaschine der mobilen Arbeitsmaschine umfasst einen Kühlwasserkreislauf, an dem wenigstens ein Wärmetauscher angeordnet ist. Darüber hinaus umfasst die Verbrennungskraftmaschine wenigstens einen Ölkreislauf, der ebenso an geeigneter Stelle wenigstens einen Wärmetauscher aufweist. Ferner ist ein zusätzlicher hydraulischer Antrieb im Aufbau der mobilen Arbeitsmaschine vorgesehen. Der dazu erforderliche Hydraulikölkreislauf umfasst ebenfalls einen Wärmetauscher. Weiterhin sind entlang des Abgaspfades der Verbrennungskraftmaschine an verschiedenen Stellen mehrere Wärmetauscher installiert.

Insbesondere sind entlang der Abgasrückführung unmittelbar hinter der Trennstrecke einer Vorrichtung zur Abgasnachbehandlung der Verbrennungskraftmaschine sowie unmittelbar vor und unmittelbar nach einer Einrichtung zur Abgasnachbehandlung Wärmetauscher installiert.

Ein Teil der voranstehend erläuterten Wärmetauscher ist direkt in wenigstens einem Wärmespeicher installiert, so dass die Sekundärseite der Wärmetauscher direkt mit dem Speichermedium des Wärmespeichers thermisch gekoppelt ist. Die verbleibenden Wärmetauscher sind über Wärmekreisläufe mit einem oder mehreren Wärmespeichern thermisch gekoppelt. Geeignete konvektive Wärmeleitungen verbinden die Sekundärseite der verbleibenden Wärmetauscher mit den Wärmespeichern, so dass ein Leistungsfluss zu einem oder mehreren Wärmespeichern erfolgt. Darüber hinaus ist ein Teil der Wärmespeicher unmittelbar über konvektive Leitungen miteinander thermisch gekoppelt.

Die einzelnen Wärmetauscher sind in Abhängigkeit der entsprechenden Entnahmestelle ausgeführt. So bieten sich Lamellenwärmetauscher, Rohrbündelwärmeübertrager oder Heat Pipes als sinnvolle Ausführungsformen an.

Ein Teil der Wärmetauscher und Wärmespeicher bilden unabhängige Wärmekreisläufe. Dies ist sinnvoll, weil einerseits die jeweils gewählten Entnahmestellen am Antrieb unterschiedliche Temperaturniveaus aufweisen und andererseits die Wärmeenergie voraussetzenden Anwendungen oftmals unterschiedliche Temperaturniveaus benötigen. Die Entnahmestelle an einem Wasserkühlkreislauf liefert ein geringeres Temperaturniveau als die Entnahme im Bereich der Abgasnachbehandlung. Die Ausführung der Erfindung sieht demnach vor, dass ein Teil der Wärmespeicher unterschiedliche Temperaturniveaus speichert.

Auch ist eine kontinuierliche Temperaturabführung an entsprechenden Entnahmestellen der mobilen Arbeitsmaschine unter Umständen nicht zu jeder Zeit zweckmäßig. So macht es z. B. keinen Sinn, die Wärmeenergie an einer Stelle abzuführen, bevor dort die Temperatur in einem für den Betrieb günstigen Bereich liegt.

Eine Wärmeentnahme im Abgaspfad würde beispielsweise die Wirksamkeit des SCR-Systems erheblich beeinträchtigen, da unter Umständen die hierzu erforderliche Betriebstemperatur unterschritten bzw. nicht erreicht wird. Aus diesem Grund ist die Temperaturentnahme durch die Wärmetauscher bzw. die Wärmekreisläufe schaltbar ausgeführt. Die Funktion bestimmter Wärmetauscher bzw. Wärmekreisläufe ist aktivierbar bzw. deaktiverbar. Auch kann eine betriebsbedingte Regelung der Wärmeentnahme vorteilhaft sein. Diese steuert die Abführmenge bzw. das zeitliche Intervall für eine Temperaturentnahme. Eine passende Regelung wird durch eine passive Hysterese bis hin zu einer aktiven Regelung erzielt.

Die gespeicherte Wärmeenergie oder die in den verschiedenen Wärmespeichern verfügbaren Energiemengen dienen vorwiegend bei abgeschalteter Verbrennungskraftmaschine, d. h. sowohl bei abgeschalteter Zündung bzw. während einer Lehrlaufunterdrückung durch eine Stopp-Start-Automatik oder während ihrer Warmlaufphase, als Quelle für einen Wärmeeintrag der verschiedene Anwendungen bzw. Funktionen. Einzelne Abgabemittel, die durch die verschiedenen Wärmespeicher mit Wärmeenergie versorgt werden, bewirken eine Stand- oder Vorheizung der Fahrerkabine oder eines Transportvolumens für Personen, Tiere, Pflanzen oder andere Transportgüter. Ebenso wird eine Standbeheizung oder Vorheizung von elektrischen Energiespeichern, die für den Betrieb der mobilen Arbeitsmaschine erforderlich oder hilfreich sind, gewährleistet. Dazu zählen unter anderem die Starterbatterie, die Traktionsbatterie oder ein Boostspeicher der Arbeitsmaschine. Wird die Innentemperatur einer Starterbatterie über Nacht bei niedrigen Umgebungstemperaturen von weit unter 0 °C auf einem konstanten Temperaturniveau, wie zum Beispiel + 10 °C, gehalten, so trägt dies maßgeblich zur Erhöhung der Kaltstartfähigkeit und zum Schutz der Batterie bei. Ebenso ist ein Abgabemittel zur Standheizung oder Vorheizung des Ölkreislaufs der Verbrennungskraftmaschine sowie der Ölkreisläufe mechanischer Getriebekomponenten sowie des Hydrauliksystems der Arbeitsmaschine förderlich.

Weiterhin sind Abgabemittel für die Standheizung oder Vorheizung des Kraftstofftanks sowie der Kraftstoffzufuhr und einer Einrichtung zur Abgasnachbehandlung vorgesehen. In diesem Zusammenhang kann das entsprechende Abgabemittel auch zur einer Vorheizung des SCR-Systems inklusive Tank und Zuleitung oder der Vorheizung beliebiger Komponenten und Systeme zukünftiger Abgasnachbehandlungssysteme, die ebenfalls eine gewisse Betriebstemperatur benötigen, verwendet werden.

Ferner sind Abgabemittel für die Beheizung einer Scheibenwaschanlage sowie zur Beheizung von Scheiben, Außenspiegeln, Schließ- und Beleuchtungseinrichtungen vorgesehen. Weiterhin basieren Warmluftgebläse, insbesondere zur Beheizung der Kabine, auf Grundlage entsprechender Abgabemittel. Auch wird ein Wärmeeintrag in eine Kältemaschine zum Kühlen der Kabine durch den Einsatz der Abgabemittel erzielt. Eine solche Kältemaschine kann natürlich die thermische Eingngsleistung aus einem Wärmespeicher beziehen, so dass die Aufrechterhaltung der Kühlung bzw. das Starten des Kühlvorgangs auch dann möglich ist, wenn aus den relevanten Komponenten der mobilen Arbeitsmaschine noch keine/nicht genügend Verlustwärme verfügbar ist.

Die nutzbaren Energieinhalte der Wärmespeicher werden durch eine entsprechende Sensorik gemessen und angezeigt. Eine zentrale Steuereinheit wertet diese Meßdaten unter Berücksichtigung weiterer spezifischer Messgrößen der mobilen Arbeitsmaschine aus und generiert die passenden Steuersignale für die Komponenten des Wärmerückgewinnungssystems. Darüber hinaus können in der Steuereinheit hinterlegte Temperaturmodelle Berücksichtigung finden. Zur koordinierten Steuerung der Wärmeströme bzw. Pfade innerhalb des Netzwerkes sind weitere Komponenten, wie stellbare Ventile, Pumpen oder beliebige Aktoren, in das Wärmenetzwerk eingebracht. Diese Komponenten können entweder durch thermische Energie und auch elektrische Energie für den Betrieb versorgt werden.

Die Steuereinheit, auf der eine lauffähige Wärmemanagement-Software installiert ist, koordiniert die verfügbaren und nutzbaren Energieinhalte der Wärmespeicher und die Netzwerkkomponenten zur Versorgung der entsprechenden Anwendungen, d. h. der Abgabemittel.

Innerhalb des Wärmenetzwerkes tritt eine Nutzungskonkurrenz für thermische Energie auf. Zur Vermeidung von derartigen Steuerkonflikten bietet die Steuereinheit ein Priorisierungskonzept für die einzelnen Abgabemittel an. So lässt sich vorzugsweise konfigurieren, dass die gespeicherte Wärmeenergie vorrangig zum Aufheizung der Kabine bereitgestellt wird und erst im Anschluß bei steter Verfügbarkeit von Wärmeenergie eine Enteisung der Außenspiegel durchgeführt wird. Die Priorisierung kann entweder manuell durch Benutzereingabe mittels Bedienfeld vorgenommen werden oder vollautomatisch unter Berücksichtigung der aktuellen Umgebungsbedingungen und -Situationen von der Wärmemanagement-Software festgelegt sein. In diesem Zusammenhang steht auch eine Erstellung individueller Nutzerprofile zur Verfügung, die eine nutzerspezifische Ansteuerung und Priorisierung der Abgabemittel ermöglicht.

Natürlich kann die Software der Steuereinheit die vollständige Ansteuerung der Ab-und Entnahmemittel in Abhängigkeit bestimmter Situationen und Zustände der Umwelt oder des Systems dynamisch vornehmen.

Ergibt beispielsweise die Auswertung eines Sensors im Fahrersitz der mobilen Arbeitsmaschine, dass die Fahrerkabine unbesetzt ist, wird im Falle einer niedrigen Außentemperatur in der Fahrerkabine die Standheizung auch dann nicht aktiviert, wenn sich die Arbeitsmaschine in der Betriebsart "Leerlaufunterdrückung" befindet.

Insbesondere werden dynamische Entnahmestrategien für die Wärmeabfuhr im Bereich der Abgasnachbehandlung angewandt. Im Falle einer vergleichsweise kurzen Betriebsunterbrechung der Verbrennungskraftmaschine soll die Abwärme gerade nicht durch die Wärmetauscher entnommen werden. Statt dessen soll die Abwärme möglichst lange im Bereich des Abgasnachbehandlung konserviert werden . Im Fall einer vergleichsweise langen Betriebsunterbrechung soll die Abwärme möglichst schnell über Wärmetauscher an den oder die entsprechenden Wärmespeicher abgeleitet werden, um die Wärmeabgabe an die Umgebung möglichst gering zu halten. Die Unterscheidung zwischen kurzer und langer Betriebsunterbrechung kann durch Benutzereingabe oder anhand bestimmter Kriterien automatisch bestimmt werden. Hierzu zählen beispielsweise das Ziehen des Zündschlüssels, die Betätigung eines entsprechenden Schalters, der Zeitrahmen der Betriebspause, usw.

Die Kenntnis der verfügbaren Energieinhalte in den Wärmespeichern gibt weiterhin einem Benutzer die Möglichkeit, dadurch gezielt bestimmte Funktionen zu beeinflussen, inklusive einer spezifischen Aktivierung bzw. Deaktivierung. So kann beispielsweise entsprechend einer sinnvollen Priorisierung die Temperatur der Kabinenheizung durch den Fahrer reduziert werden.

Die erfindungsgemäße mobile Arbeitsmaschine erlaubt eine erhebliche Kraftstoffeinsparung im Vergleich zu bekannten Arbeitsmaschinen. Darüber hinaus zeichnet sich die erfindungsgemäße Arbeitsmaschine durch eine schnellere Verfügbarkeit bestimmter Systemkomponenten aus. So ist beispielsweise die Heizfunktionalität der Fahrerkabine aufgrund der direkten Wärmespeicherung ohne Weiteres noch vor der Wärmelaufphase des Antriebs verfügbar. Darüber hinaus bietet sich die Möglichkeit, bestimmte Antriebskomponenten der Arbeitsmaschine vor dem Betrieb aufzuwärmen, was eine gesteigerte Kaltstartfähigkeit der Verbrennungsmaschine mit sich bringt. Darunter fällt auch die Aufwärmung bestimmter Komponenten des Abgasnachbehandlungssystems der Verbrennungskraftmaschine vor Betriebsbeginn. Die voranstehend erläuterte Temperierung elektrischer Energiespeicher wirkt der Abkühlung von Batterien bei niedrigen Aussentemperaturen entgegen. Dies ist von grossem Vorteil, weil sich das Leistungsabgabevermögen von Batterien (der meisten Zelltechnologien) bei tiefen Temperaturen erheblich reduziert. Auch können durch das gezielte Wärmemanagement kleinere Kühler verbaut werden, weil ein deutlicher Anteil der Verlustwärme überhaupt nicht mehr von dem Kühler abgeführt werden muss.

Insgesamt ergibt sichfür den Betreiber der mobilen Arbeitsmaschine eine höhere Systemverfügbarkeit, eine Kraftstoffeinsparung und eine Reduzierung der Schadstoffemissionen. Dem Fahrzeugführer bietet sich der mobilen Arbeitsmaschine eine spürbare Komforterhöhung, die nicht nur während des Betriebs, sondern auch maßgeblich vor Betriebsbeginn in Erscheinung tritt.

## Patentansprüche

1. Mobile Arbeitsmaschine mit wenigstens einem Abwärme produzierenden Antrieb, insbesondere einer Verbrennungskraftmaschine,
**dadurch gekennzeichnet,**
**dass** die mobile Arbeitsmaschine wenigstens einen Wärmespeicher zur Speicherung der Abwärme aufweist.

2. Mobile Arbeitsmaschine nach Anspruch 1, **dadurch gekennzeichnet, dass** wenigstens ein Entnahmemittel, insbesondere ein Wärmetauscher, zur Wärmeentnahme am Antrieb vorgesehen ist.

3. Mobile Arbeitsmaschine nach Anspruch 2, **dadurch gekennzeichnet, dass** die entnommene Wärme unmittelbar einem Wärmespeicher zuführbar ist oder mittelbar über wenigstens einen Wärmekreislauf mindestens einem Wärmespeicher zuführbar ist.

4. Mobile Arbeitsmaschine nach einem der vorhergehenden Ansprüche, **dadurch gekennzeichnet, dass** die Wärmeentnahme am Wasserkühlkreislauf und/oder am Ölkreislauf und/oder am Abgaspfad des Antriebs erfolgt.

5. Mobile Arbeitsmaschine nach einem der vorhergehenden Ansprüche, **dadurch gekennzeichnet, dass** wenigstens ein Entnahmemittel manuell und/oder automatisiert steuerbar und/oder regelbar ist.

6. Mobile Arbeitsmaschine nach einem der vorhergehenden Ansprüche, **dadurch gekennzeichnet, dass** wenigstens ein Wärmespeicher mit wenigstens einem Wärmeabgabemittel in Verbindung steht oder verbindbar ist.

7. Mobile Arbeitsmaschine nach einem der vorhergehenden Ansprüche, **dadurch gekennzeichnet, dass** wenigstens ein Entnahmemittel und/oder wenigstens ein entsprechender Wärmekreislauf bidirektional ausgeführt ist/sind.

8. Mobile Arbeitsmaschine nach einem der vorhergehenden Ansprüche, **dadurch gekennzeichnet, dass** mehrere Wärmespeicher vorgesehen sind, die zumindest teilweise unabhängige Wärmekreisläufe bilden.

9. Mobile Arbeitsmaschine nach einem der vorhergehenden Ansprüche, **dadurch gekennzeichnet, dass** wenigstens ein Wärmespeicher ein Latentwärmespeicher ist und/oder wenigstens ein Wärmespeicher ein Wärmeträgermedium zur Wärmespeicherung umfasst und/oder wenigstens ein Wärmespeicher auf Grundlage einer durch Wärmeausdehnung hervorgerufenen Druckänderung basiert.

10. Mobile Arbeitsmaschine nach einem der vorhergehenden Ansprüche, **dadurch gekennzeichnet, dass** wenigstens ein Wärmespeicher Mess- und/oder Anzeigemittel zur Messung und Anzeige betriebsbedingter Parameter aufweist.

11. Mobile Arbeitsmaschine nach einem der vorhergehenden Ansprüche, **dadurch gekennzeichnet, dass** wenigstens eine Steuereinheit mit einer entsprechenden Wärmemanagement-Software vorgesehen ist, die zur Steuerung der Wärmeentnahme und/oder Wärmeabgabe in Abhängigkeit ein oder mehrerer betriebsspezifischer Parameter des Mobilkrans und/oder ein oder mehrerer Benutzereingaben geeignet ist.

12. Vorrichtung zur Wärmerückgewinnung aus wenigstens einem Abwärme produzierenden Antrieb einer mobilen Arbeitsmaschine nach einem der vorangegangenen Ansprüche.

13. Steuereinheit mit einer Wärmemanagement-Software für eine mobile Arbeitsmaschine gemäß einem der Ansprüche 1 bis 11 oder eine Vorrichtung gemäß Anspruch 12.
